# EUROPÄISCHE PATENTSCHRIFT

(11) **EP 1 961 351 B1**
(45) Veröffentlichungstag und Bekanntmachung des Hinweises auf die Patenterteilung: **11.05.2011**
(21) Anmeldenummer: 08003455.6
(22) Anmeldetag: 26.02.2008
(51) Int. Cl.: A47J 31/36

(54) **Brüheinheit eines Getränkezubereitungsgeräts**
Heating element of a drink preparation device
Unité d'échaudage d'un appareil de préparation de boissons

(30) Priorität: 26.02.2007 DE 202007002910 U
(43) Veröffentlichungstag der Anmeldung: 27.08.2008
(73) Patentinhaber: Eugster/Frismag AG, 8580 Amriswil (CH)
(72) Erfinder: Mahlich, Gotthard, 61476 Kronberg (DE)
(74) Vertreter: Schubert, Siegmar

(56) Entgegenhaltungen:
- EP-A- 1 500 358
- WO-A-2006/080843
- FR-A- 2 842 090

## Beschreibung

Die Erfindung betrifft eine Brüheinheit eines Getränkezubereitungsgeräts mit wenigstens einer ersten Aufnahmekammer mit einem Auslauf, die zur Aufnahme einer Kaffee- oder Kakaoportionseinheit und Zubereitung eines Getränks durch deren Gebrauch geeignet ist, nach dem Oberbegriff des Anspruchs 1.

Zum Stand der Technik gehören Getränkezubereitungsgeräte für den Einsatz von vorportionierten Kaffee- oder Kakao-, oder Milch- oder Milchpulverportionseinheiten. Die Portionseinheiten können in Form von Aluminium- oder Kunststoffkapseln oder in Form von Papierpouches vorliegen.

Bekannte Getränkezubereitungsgeräte sind mit einer Brüheinheit ausgebildet, die nur eine einzige Aufnahmekammer einer solchen Portionseinheit darstellt bzw. enthält, wobei in die gleiche Aufnahmekammer, in der eine vorportionierte Kaffee- oder Kakaoportionseinheit zur Getränkezubereitung eingelegt werden kann, statt dessen eine vorportionierte Milch- oder Milchpulverportionseinheit eingebracht werden kann und zur Kaffee-, Kakao-, Milch- oder Milchschaumerzeugung benutzt werden kann.

Als Brüheinheiten sind zwei bevorzugte Bauformen bekannt:

Bei der ersten Bauform wird jeweils eine Portionseinheit in einen Schubladenträger gelegt, der mit der Portionseinheit in die Brüheinheit eingeschoben wird, womit der Schubladenträger flüssigkeits- und druckdichter Teil des Brühsystems wird. Bei Aluminium- oder Kunststoffkapseln erfolgt die Brühwasserzuführung mittels wenigstens einer Einstichnadel, die entweder während des Einschiebens oder durch Betätigung eines Verriegelungshebels in die Portionseinheit eingestochen wird. Bei Papierpouches erfolgt die Wasserzuführung dagegen in der Regel durch auf Press auf die Pouches aufgesetzte Wasserzuführungsdüsen, die ebenfalls durch den Einschubvorgang oder durch Betätigung eines Verriegelungshebels positioniert werden können. Nach dem Zubereitungsvorgang erfolgt eine Entsorgung der verbrauchten Portionseinheit von Hand, indem der Schubladenträger aus der Brüheinheit gezogen wird, womit die Portionseinheit freigelegt wird.

Bei der zweiten bevorzugten Bauform wird zum Beschicken der Brühkammer mit jeweils einer Portionseinheit das Oberteil der Brühkammer durch Hochschwenken geöffnet und nach Einlegen der Portionseinheit wieder geschlossen, wobei während des Schließens die Brühkammer automatisch verriegelt und druck- und flüssigkeitsdicht verschlossen wird, die Wasserzuführungsnadeln in die Kapsel eingestochen werden oder die Wasserzuführungsdüse auf den Pouch gepresst wird. Bei der zweiten Bauform erfolgt die Entsorgung der Portionseinheit bevorzugt automatisch während des Öffnens der Brüheinheit mittels einer Auswerfervorrichtung in ein zur Aufnahme der verbrauchten Portionskapsel in dem Zubereitungsgerät angeordnetes Abfallgefäß.

Die Verwendung einer der obigen bekannten Getränkezubereitungsgeräte mit der gleichen Brüheinheit für die Portionseinheiten, d.h. Kapseln oder Pouches für Kaffee, Kakao, Milch oder Milchpulver, setzt voraus, dass für den Gebrauch von Portionseinheiten mit unterschiedlichem Inhalt dieselben Wasserzuführungs- und Getränkeaustrittsvorrichtungen vorgesehen sind.

Bei den bekannten Getränkezubereitungsgeräten ist es zur Zubereitung eines Kaffee-Milehgetränkes, bedingt durch die Nutzung der gleichen Brühoder Aufnahmekammer für Kaffee-, Kakao- und Milch- oder Milchpulverportionseinheiten, zwangsläufig erforderlich, dass die jeweils zweite Zubereitungsart in einem zweiten Arbeitsgang erfolgen muss, d.h. dass z.B. nach einem Kaffeezubereitungszyklus erst die verbrauchte Kaffeeportionseinheit aus der Brüheinheit entsorgt wird, daran anschließend die Milch- oder Milchpulverportionseinheit in die Brüheinheit eingelegt wird und schließlich nach dem Zubereitungszyklus entsorgt wird.

Eine bekannte Brüheinheit eines Getränkezubereitungsgeräts der eingangs genannten Gattung weist eine erste Aufnahmekammer mit einem Auslauf zur Aufnahme einer Kaffeeportionseinheit sowie daneben eine zweite Aufnahmekammer mit einem Auslauf zur Aufnahme einer zweiten Kaffeeportionseinheit oder aber einer Milchportionseinheit auf (FR-A-2 842 090). Dementsprechend ist es möglich, durch Gebrauch der Brüheinheit gleichzeitig zwei Tassen Kaffee aufzubrühen oder Milchkaffee zuzubereiten. Die Erzeugung von Milchschaum oder eines Getränks mit Milchschaum ist hingegen nicht vorgesehen, Zumindest die erste Aufnahmekammer ist somit eine Brühkammer. Die Formen der beiden Kammern sind an die aufzunehmenden Portionseinheiten angepasst und können unterschiedlich sein. Zur Zufuhr heißen Wassers unter Druck in die Portionseinheiten ist eine Wasserzufuhrvorrichtung mit hohlen Nadeln vorgesehen, von denen jeweils wenigstens eine in eine der beiden Portionseinheiten einsticht. Die beiden Aufnahmekammern sind in einem gemeinsamen Träger ausgeformt, der seitliche Vorsprünge aufweist, welche die Entnahme des Trägers aus einem festen Sitz erleichtern sollen.

In einer anderen bekannten Brüheinheit eines Getränkezubereitungsgeräts sind in einer Aufnahmekammeranordnung eine erste Aufnahmekammer für eine zu extrahierende Substanz und eine zweite Aufnahmekammer für eine Substanz, die in Wasser löslich ist, übereinander angeordnet (WO 2006/080843 A). Ein Auslauf der ersten Aufnahmekammer ragt in einen Einlauf der zweiten Aufnahmekammer, die ähnlich wie die erste Aufnahmekammer mit einem Deckel verschlossen ist. Ein Auslauf der zweiten Aufnahmekammer weist eine Verengung als Düse auf, die in ein Auffanggefäß gerichtet ist. Im Betrieb der Brüheinheit wird zunächst kaltes Wasser durch die erste Aufnahmekammer, in der gemahlener Kaffee enthalten ist, geleitet und anschließend durch Müchpulver in der zweiten Aufnahmekammer, in der Milch aus aufgelöstem Müchpulver entsteht. Die Milch fließt durch den verengten Auslauf der zweiten Aufnahmekammer in das Auffanggefäß. Der auf dessen Boden und die Milch in dem Auffanggefäß auftreffende Milchstrahl soll in diesem eine Milchschaumschicht bilden. Erst anschließend wird Kaffee mit heißem Wasser in der ersten Aufnahmekammer extrahiert, wonach der Kaffee durch die zweite Kammer und den Auslauf der zweiten Kammer ausströmt, wo die Milchschaumschicht aufschwimmen soll.

Die vorliegende Erfindung geht von der Aufgabe aus, eine Brüheinheit für ein Getränkezubereitungsgerät vorzuschlagen, mit der die Getränkezubereitung, insbesondere Kaffee- oder Kakaozubereitung, sowie die Milch- oder Milchschaumerzeugung flexibler in einem rationelleren Zubereitungsablauf erfolgen können, bei dem Verzögerungen durch Entsorgungs- oder Beschickungsvorgänge verkürzt sind.

Zu diesem Zweck wird eine Brüheinheit mit den Merkmalen des Anspruchs 1 vorgeschlagen.

Mit dieser Brüheinheit können die Kaffee- oder Kakaozubereitung einerseits und die Milch- oder Milchschaumerzeugung andererseits je nach Vorgabe bzw. Steuerung der Brüheinheit gleichzeitig oder zeitlich versetzt ablaufen, wobei Entsorgungs- oder Beschickungsvorgänge an beiden Aufnahmekammern praktisch gleichzeitig erfolgen können.

Zur Entsorgung der Portionseinheiten nach deren Gebrauch, d.h. Herstellung des Getränke- bzw. Milchprodukts, aus der ersten Aufnahmekammer und aus der zweiten Aufnahmekammer, ist diesen eine gemeinsame selbsttätige Auswerfervorrichtung zugeordnet. Mit dieser kann statt einem manuellen Auswurf der ersten Portionskapsel und der zweiten Portionskapsel nach Öffnen der Brüheinheit der Auswurfvorgang beim Öffnen der Brüheinheit selbsttätig erfolgen, und zwar für beide Portionseinheiten gleichzeitig.

Die erfindungsgemäße Brüheinheit ist zur rationellen Getränkezubereitung vielseitig einsetzbar: Zum Beispiel wird für die Zubereitung von Kaffee nur eine Kaffeeportionseinheit in die dafür vorgesehene erste Aufnahmekammer gelegt, die in diesem Fall eine Brühkammer gemäß Anspruch 5 ist. Nur zur Milchzubereitung wird hingegen eine Milchportionseinheit in die für sie vorgesehene zweite Aufnahmekammer gelegt. Es ist aber auch möglich, sowohl eine Kaffeeportionseinheit in die erste Aufnahmekammer, eine Brühkammer, einzulegen als auch eine Milch- oder Milchpulverportionseinheit in die für diese vorgesehene zweite Aufnahmekammer. Durch eine Steuerungsanordnung können die Zubereitungen zeitlich versetzt erfolgen, wenngleich das Einlegen der Kaffeeportionseinheit und der Milch- oder Milchpulverportionseinheit simultan erfolgen kann und die entleerte Kaffeeportionseinheit und entleerte Milch- oder Milchpulverportionseinheit nach Ablauf der Gesamtzubereitung des Getränks gleichzeitig aus der ersten Aufnahmekammer und aus der zweiten Aufnahmekammer entsorgt werden können. Während seiner Zubereitung wird das Getränk durch einen Auslauf der ersten Aufnahmekammer aus dieser entleert. Ein Abfluss der Milch aus der zweiten Aufnahmekammer erfolgt über deren Auslauf, wobei das Getränk und die Milch von dem gleichen Aufnahmegefäß aufgenommen werden können. Der Ausdruck "Auslauf" der Aufnahmekammer bedeutet dabei jedwede Öffnung in der Aufnahmekammer, durch die das Getränk bzw. Milch direkt abfließen kann oder in Verbindung mit einem Auslauf der Portionseinheit, die durch die Öffnung, insbesondere Durchgangsöffnung, der Aufnahmekammer hindurchtritt.

Ein wesentlicher Aspekt der Brüheinheit besteht darin, dass diese nach Anspruch 2 auch zur Zubereitung von Milchschaum, insbesondere für Cappuccino, geeignet ist. Sie kann hierzu in einer ersten Ausführungsform unkompliziert ohne gerätegebundene Schäumvorrichtung auskommen, indem die zweite Aufnahmekammer so ausgebildet ist, dass in sie eine handelsübliche Milch- oder Milchpulverportionseinheit mit integrierter Schäumvorrichtung gemäß Anspruch 2 eingesetzt werden kann.

Zur Verwendung von einfacheren Milch- oder Milchpulverportionseinheiten, die keine integrierte Schäumvorrichtung zur Zubereitung von Milchschaum enthalten, ist besonders vorteilhaft die für diese Milch- oder Milchpulverportionseinheiten vorgesehene zweite Aufnahmekammer mit einer Schäumvorrichtung gemäß Anspruch 2 auszustatten, die unterhalb der zweiten Aufnahmekammer angeordnet ist und mit deren Auslauf in fluidleitender Verbindung steht. Infolge der Zuordnung der zweiten Aufnahmekammer zur Aufnahme einer Milch- oder Milchpulverportionseinheit kann die Schäumvorrichtung unverwechselbar an der zweiten Aufnahmekammer angeordnet sein.

Gleichwohl ist es möglich, die der zweiten Aufnahmekammer zugeordnete Schäumvorrichtung als austauschbares Wegwerfteil zu verwirklichen, um ohne zeitaufwendige Spül- und Reinigungsvorgänge einen hygienischen Betrieb der Brüheinheit zu gewährleisten

Für die Brüheinheit, bei der die Portionseinheiten für unterschiedliche Inhalte verschiedene Formen aufweisen, sind die Kammeraufnahmen gemäß Anspruch 1, wie an sich bekannt, vorteilhaft mit ihrer jeweiligen Innenform an die Außenform der aufzunehmenden Portionseinheit angepasst. Dies kann wirksam dazu beitragen, Verwechslungen bei der Beschickung der Aufnahmekammern zu vermeiden.

Zu dem gleichen Zweck können die Portionseinheiten, insbesondere dann, wenn sie für unterschiedliche Inhalte gleiche Formen aufweisen, nach Anspruch 4 mit einer optischen Kennung ausgestattet sein, die mit einer optischen Kennung an der ersten und/oder zweiten Aufnahmekammer korrespondiert. Diese Kennungen können von einer Bedienungsperson ohne weiteres gelesen und zur richtigen Beschickung beachtet werden. Außerdem können die Portionseinheiten mit einer mechanischen, optischen, elektrischen oder magnetischen Kennung ausgestattet sein, die mit entsprechenden Leseeinrichtungen in der Brüheinheit bzw. an den Aufnahmekammern gemäß Anspruch 22 erfasst werden, so dass der Inhalt der Portionseinheiten mittels der Steuervorrichtung identifiziert werden kann, die mit den Ausgängen der Leseeinrichtungen in signalübertragender Verbindung steht. Darüber hinaus kann mittels den Leseeinrichtungen und der Steuerungsanordnung die Getränkezubereitung getränkeartabhängig selbsttätig erfolgen, wozu insbesondere Reihenfolge und Menge der Wasserzufuhr in jeweils eine der beiden Aufnahmekammern gemäß Anspruch 23 gesteuert werden kann. Im Falle der mechanischen und optischen Kennungen der Portionseinheiten können diese aber auch zur Vermeidung von Verwechslungen durch den Benutzer ohne weiteres erkannt werden, um eine richtige Zuordnung zu den Aufnahmekammern zu gewährleisten.

Wie oben erwähnt kann die vielseitig einsetzbare Brüheinheit dazu benutzt werden, nur Kaffee zuzubereiten oder nur Milch bzw. Milchschaum aufzubereiten, wozu also nur eine der beiden Aufnahmekammern die ihr zugeordnete Portionseinheit aufzunehmen hat. Damit die Steuerungsanordnung das Vorhandensein einer Portionseinheit in jeweils einer der Aufnahmekammern erkennt, ist gemäß Anspruch 18 an der ersten Aufnahmekammer und an der zweiten Aufnahmekammer je eine Prüfeinheit angeordnet, die als Abtasteinrichtung ausgebildet sein kann und die in Verbindung mit der Steuerungsanordnung eine Heißwasserzufuhr nur zu der Aufnahmekammer freischaltet, in die eine Portionseinheit eingesetzt ist. Damit wird eine sichere Funktion der Brüheinheit bei wechselnden Belegungen der Aufnahmekammem gewährleistet.

Konstruktiv können die erste Aufnahmekammer und die zweite Aufnahmekammer kompakt als eine gemeinsame Baueinheit gemäß Anspruch 6 ausgebildet sein. Es ist aber auch möglich, die erste Aufnahmekammer getrennt von der zweiten Aufnahmekammer als separate Einheit zu konzipieren.

Unabhängig davon, ob die beiden Aufnahmekammern in einem gemeinsamen Bauteil integriert sind oder getrennt voneinander angeordnet sind, werden die Ausläufe der beiden Aufnahmekammern zweckmäßigerweise so angeordnet, dass sie die in der Aufnahmekammer bereiteten Produkte sowohl in ein einziges Auffanggefäß als auch in zwei nebeneinander stehende Auffanggefäße leiten können.

Statt dessen ist es aber in beiden Fällen der in einer Baueinheit integrierten oder nicht integrierten Anordnung der ersten Aufnahmekammer und der zweiten Aufnahmekammer möglich, deren Ausläufe zu einem gemeinsamen Auslaufkanal nach Anspruch 7 zusammenzuführen, um durch diesen ein einheitliches Getränkeprodukt oder zeitlich hintereinander zwei Getränkeprodukte in das Aufnahmegefäß zu leiten.

Es ist statt dessen aber auch möglich, die Brüheinheit mit einer um eine im wesentlichen waagerechte Achse aufklappbarem Brühkammeroberteil oder aber mit einem um eine ebenfalls im wesentlichen waagerechte Achse abklappbarem Brühkammerunterteil gemäß den Ansprüchen 8 und 9 auszubilden.

Alternativ sind auch Bauformen der Brüheinheit mit einer um eine im wesentlichen vertikale Achse schwenkbaren Oberteil oder Unterteil gemäß Anspruch 10 bzw. 11 realisierbar.

Weiterhin kann die Brüheinheit zur hygienischen Reinigung der beiden Aufnahmekammern gemäß Anspruch 12 mit einer für beide Aufnahmekammern gleichzeitig aktivierbaren Spülvorrichtung versehen sein, womit eine Spülung der beiden Kammern vor oder nach einem Getränkezubereitungszyklus erfolgen kann.

Wie an sich bekannt, mündet eine Wasserzufuhrvorrichtung, die insbesondere eine Heißwasserzufuhrvorrichtung ist, oben in die erste Aufnahmekammer und in die zweite Aufnahmekammer. Zur flexiblen Zubereitung verschiedener Getränke sowie zur Milchaufbereitung, insbesondere Herstellung von Milchschaum, kann die Wasserzufuhrvorrichtung mit einer solchen Steuerungsanordnung nach Anspruch 1 3 aktiviert werden, dass Wasser im wesentlichen gleichzeitig der ersten Aufnahmekammer und der zweiten Aufnahmekammer zugeführt wird oder diesen beiden Kammern zeitlich gestaffelt zugeführt wird, oder aber lediglich der ersten Aufnahmekammer oder nur der zweiten Aufnahmekammer zugeleitet wird. Mit der Steuerungsanordnung werden also die Aktivierung von einer oder zwei Aufnahmekammern, die Zubereitungsreihenfolge und die jeweils dosierten Mengen gesteuert. Damit ergeben sich insbesondere für ein Kaffee-Milchgetränk folgende Möglichkeiten: Gleichzeitige Zubereitung von Kaffee und Milch oder Milchschaum, oder erst Brühen von Kaffee und dann Zubereitung von Milchschaum, oder aber erst Zubereitung von Milchschaum und dann Brühen von Kaffee oder erst Milch, dann Milchschaum und schließlich Espresso. Dabei kann zusätlich die verabreichte Wassermenge und daraus resultierende Getränkeproduktmenge gewählt werden.

Die Wasserzufuhr in die erste Aufnahmekammer und/oder in die zweite Aufnahmekammer erfolgt dabei mittels gesteuerter Ventile, die bevorzugt von Ausgängen der Steuerungsanordnung gemäß Anspruch 14 gesteuert werden. Eine Anordnung der gesteuerten Ventile kann bevorzugt nach Anspruch 15 als Keramikscheibenventil realisiert sein, das zur Zubereitung hochwertiger Getränke besonders geeignet ist. Gemäß Anspruch 16 bzw. 17 können die gesteuerten Ventile aber auch als einzelne Magnetventile oder als Schlauchklemmventile gemäß verwirklicht sein.

Eine Zubereitungswasser-Mengensteuerung kann mittels der genannten Ventile und kontrolliert mittels in den Versorgungsleitungen liegenden Durchflussmessern (flow meter) und der Steuervorrichtung oder von Hand, dem subjektiven Geschmack entsprechend, erfolgen.

Wie oben erwähnt können Prüfeinheiten an der ersten Aufnahmekammer und an der zweiten Aufnahmekammer in Verbindung mit der Steuerungsanordnung eine Wasserzufuhr über die gesteuerten Ventile zu einer der Aufnahmekammern bzw. zu beiden nur freischalten, wenn in die Aufnahmekammern jeweils eine Portionseinheit eingesetzt ist.

Weiterhin ist es zur Erhöhung der Betriebssicherheit gemäß Anspruch 23 zweckmäßig, Mittel zum Wasserzufuhrstop bei geöffneter Brüheinheit oder gezogenem Schubladenträger in Verbindung mit der Steuerungsanordnung und den gesteuerten Ventilen vorzusehen.

Die Zubereitung eines gewünschten Getränks kann gemäß Anspruch 24 fest programmiert automatisch erfolgen, indem die Reihenfolge der Zubereitung der Getränkekomponenten sowie deren Menge, insbesondere für Kaffee- und Milchschaumerzeugung, fest programmiert ist. Vorteilhaft können mehrere solcher Programme für verschiedene Getränke in der Steuerungsanordnung gespeichert sein und mittels einer Auswahlvorrichtung gemäß Anspruch 25 ausgewählt werden.

Ist die Brüheinheit gemäß Anspruch 26 mit jeweils einer Leseeinrichtung an den Aufnahmekammern für eine Kennung der in die Aufnahmekammer eingesetzten Portionseinheiten ausgestattet, deren Ausgang mit der Steuerungsanordnung in signal-/datenübertragender Verbindung steht, so kann durch Erfassung der Kennungen der Portionseinheiten, die jeweils einer Getränkeart zugeordnet sind, die Auswahleinrichtung zur Auswahl des entsprechenden gespeicherten Programms gemäß Anspruch 27 gesteuert werden.

Ausführungsbeispiele der Erfindung werden im folgenden anhand einer Zeichnung mit sechs Figuren näher beschrieben, woraus sich weitere vorteilhafte Merkmale der Erfindung ergeben können. Es zeigen:
- Figur 1: Eine teilweise geschnittene Vorderansicht eines schematisch dargestellten Getränkezubereitungsgeräts mit einer ersten Ausführungsform einer Brüheinheit, die eine erste Aufnahmekammer für eine Kaffee- oder Kakaoportionseinheit und eine zweite Aufnahmekammer für eine Milch- oder Milchpulverportionseinheit mit integrierter Schäumvorrichtung umfasst, wobei die Brüheinheit geschlossen dargestellt ist,
- Figur 2: das Getränkezubereitungsgerät gemäß Figur 1, jedoch in einer Seitenansicht mit einem geöffneten Brüheinheitoberteil,
- Figur 3: eine Vorderansicht eines schematisch dargestellten Getränkezubereitungsgeräts mit einer zweiten Ausführungsform der Brüheinheit, die eine Brühkammer für eine Kaffeeportionseinheit und eine Aufnahmekammer für eine Milch- oder Milchpulverportionseinheit ohne integrierte Schäumvorrichtung beinhaltet, wobei unterhalb der Aufnahmekammer für die Milch- oder Milchpulverportionseinheit eine mit dieser in Verbindung stehende externe Milchschäumvorrichtung angeordnet ist,
- Figur 4: schematisch in auseinandergenommener Darstellung ein Zwei-Wege-Keramikventil zur Wasserzufuhr, d.h. Heißwasserzufuhr zu der ersten Aufnahmekammer und/oder der zweiten Aufnahmekammer,
- Figur 5a: schematisch die Stellung des Keramikventils und eines Luftsperrventils für die Zubereitung von Cappuccino, sowie ein zugehöriges Ablaufdiagramm,
- Figur 5b: schematisch die Stellung des Keramikventils und des Luftsperrventils für die Zubereitung von Espresso, sowie ein zugehöriges Ablaufdiagramm,
- Figur 5c: schematisch die Stellung des Keramikventils und des Luftsperrventils für die Zubereitung von Latte Macchiato, sowie ein zugehöriges Ablaufdiagramm, und
- Figur 6: im wesentlichen einen Querschnitt durch ein Ausführungsbeispiel einer Schäumvorrichtung, die unter der Milch- oder Milchpulverportionsaufnahmekammer der zweiten Ausführungsform der Brüheinheit gemäß Figur 3 angeordnet ist.

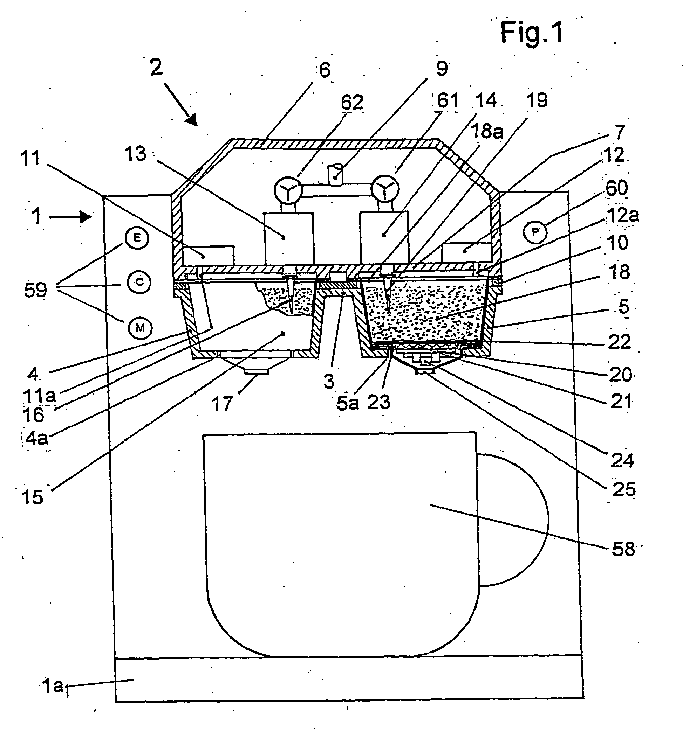

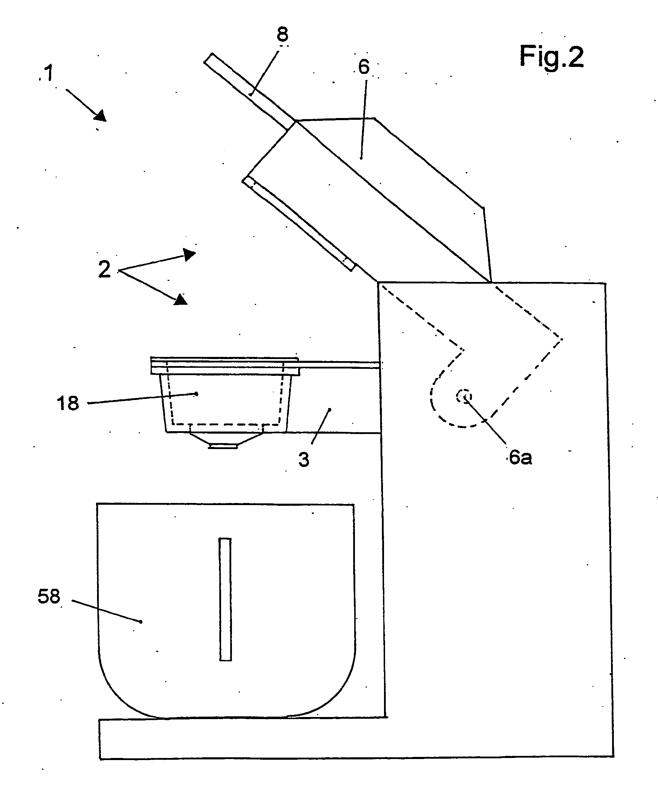

Das in den Figuren 1 und 2 dargestellte Getränkezubereitungsgerät 1 ist in dieser ersten Ausführungsform speziell zur wahlweisen Zubereitung von Espresso, Cappuccino oder Latte Macchiato, einer Getränkekombination aus einer Schichtung von Milch darüber liegendem Espresso und wiederum darauf liegendem Milchschaum, ausgebildet und weist hierzu oberhalb eines Aufnahmesockels 1 a eines Aufnahmegefäßes 58 eine Brüheinheit 2 mit einem Portionseinheitenaufnahmeträger 3 auf.

Der Portionseinheitenaufnahmeträger 3 ist mit einer Aufnahmekammer 4 für eine Kaffee- oder Kakaoportionseinheit 15 und einer Aufnahmekammer 5 für eine Milch- oder Milchpulverportionseinheit 18 ausgestattet, und zwar sind die beiden Aufnahmekammern 4 und 5 hier in gleicher Höhe nebeneinander angeordnet. Im wesentlichen oberhalb des Portionseinheitenaufnahmeträgers 3 ist ein Brüheinheitoberteil 6 mit einem Brüheinheitoberteilchassis 7 um eine waagerechte Achse 6a schwenkbar angeordnet, so dass in der in Figur 1 dargestellten Position des Brühkammeroberteils 6 der Portionseinheitenaufnahmeträger 3 sowohl nach außen als auch zwischen den Aufnahmekammern 4 und 5 fluid- und druckdicht abgedichtet ist, wogegen in der in Figur 2 dargestellten Position das Brüheinheitoberteil 6 mittels eines Schwenkhebels 8 so weit angehoben ist, dass die Aufnahmekammern 4 und 5 von außen frei zugänglich sind.

Das Brüheinheitoberteil 6 schließt einen Heißwasserzulauf 9 ein, der in nicht dargestellter Weise mit dem Auslauf eines Durchlauferhitzers oder eines Boilers in dem Getränkezubereitungsgerät 1 in Verbindung steht. Der Durchlauferhitzer wird über eine Pumpe 65 aus einem ebenfalls in dem Getränkezubereitungsgerät 1 vorhandenen Vorratsgefäß mit Wasser gespeist. Im Falle des Boilers erfolgt die Heißwasserzuführung zu dem Heißwasserzulauf 9 unter Dampfdruck.

In beiden Fällen ist von dem Heißwasserzulauf 9 je eine nicht bezeichnete Leitung zu einem Magnetventil 13 bzw. 14 abgezweigt, welches jeweils einer der Aufnahmekammern 4 und 5 zugeordnet ist.

Oben zwischen den Aufnahmekammern 4, 5 und einer Unterseite des Brüheinheitoberteilchassis 7 sind Teile einer Auswerfervorrichtung 10 erkennbar, auf denen vorstehende Ränder einer in die Aufnahmekammer 4 eingelegten Kaffee- oder Kakaoportionseinheit 1 5 bzw. einer Milch- oder Milchpulverportionseinheit 18 mit integrierter Schäumvorrichtung aufliegen.

Innerhalb des Brühkammeroberteils sind Mikroschalter 11, 12 gezeigt, deren Betätigungselemente 11a, 12a durch die in die Kammern 4, 5 eingelegten Portionseinheiten 15, 18 betätigt werden.

In dem Brüheinheitoberteilchassis 7 sind eine Brühwasserzulaufnadel 16 und eine Heißwasserzulaufnadel 1 9 dicht eingesetzt, so dass sie in die Kaffee- oder Kakaoportionseinheitaufnahmekammer 4 bzw. die Milch- oder Milchpulverportionseinheitaufnahmekammer 5 hineinragt und in die Kaffee- oder Kakaoportionseinheit 15 bzw. die Milch- oder Milchpulverportionseinheit 18 einstechen, wenn sich das Brüheinheitoberteil 6 in Verschlussstellung befindet. Die Brühwasserzulaufnadel 16 kann über das Magnetventil 13 mit Brühwasser aus dem Heißwasserzulauf 9 versorgt werden und die Heißwasserzulaufnadel 19 ist über das Magnetventil 14 mit dem Heißwasserzulauf 9 verbindbar.

Jede der beiden Aufnahmekammern 4, 5 weist einen Auslauf 4a bzw. 5a auf, der in dem ersten Ausführungsbeispiel durch eine einfache Öffnung der Aufnahmekammer 4 bzw. 5 gebildet ist, durch den ein Kaffeeauslauf 17 der Kaffee- oder Kakaoportionseinheit 15 bzw. ein Milchschaumauslauf 25 der Milch- oder Milchpulverportionseinheit 18 mit integrierter Schäumvorrichtung nach unten herausragt, wenn diese Portionseinheiten 15, 18 in die Aufnahmekammern 4, 5 eingelegt sind.

Der Kaffeeauslauf 17 und der Milchschaumauslauf 25 sind aus einem nicht bezeichneten Boden der Kaffee- oder Kakaoportionseinheit 15 bzw. der Milch- oder Milchpulverportionseinheit 18 ausgeformt, die sich jeweils von einem nicht bezeichneten Boden um den Kaffeeauslauf 17 bzw. um den Milchschaumauslauf 25 zu einer oberen Abdeckfolie 18a kegelstumpfförmig erweitert.

Die in die Milch- oder Milchpulverportionseinheit 18 integrierte Schäumvorrichtung umfasst an deren Boden eine innen liegende Pyramidenplatte 20, die mit Pyramiden 21 eine über ihr angeordnete Trennfolie 22 durchstoßen kann. Die Pyramidenplatte 20 weist an ihrem Rand einen Siebkamm 23 und unter ihrer Bodenfläche ein Schäumlabyrinth 24 zur Milchschaumerzeugung auf.

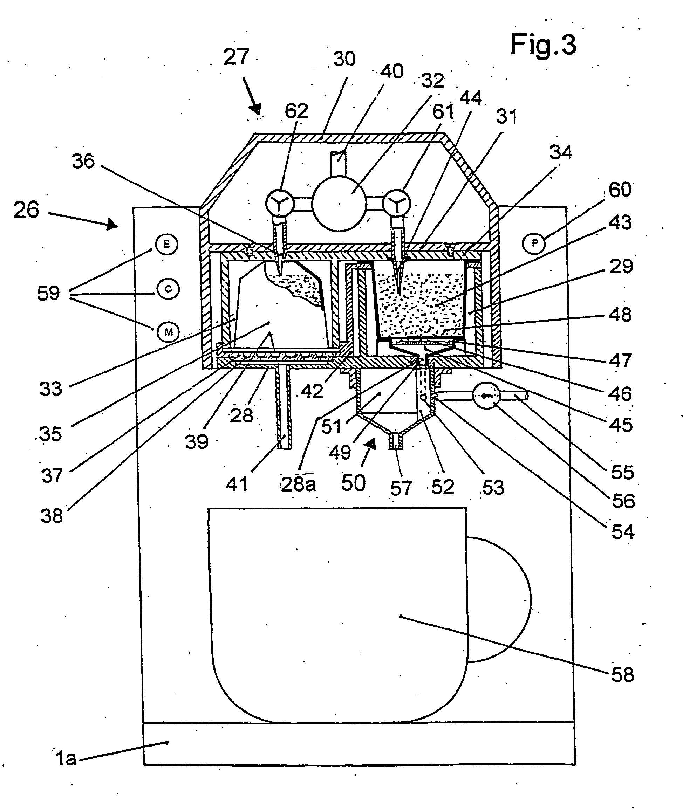

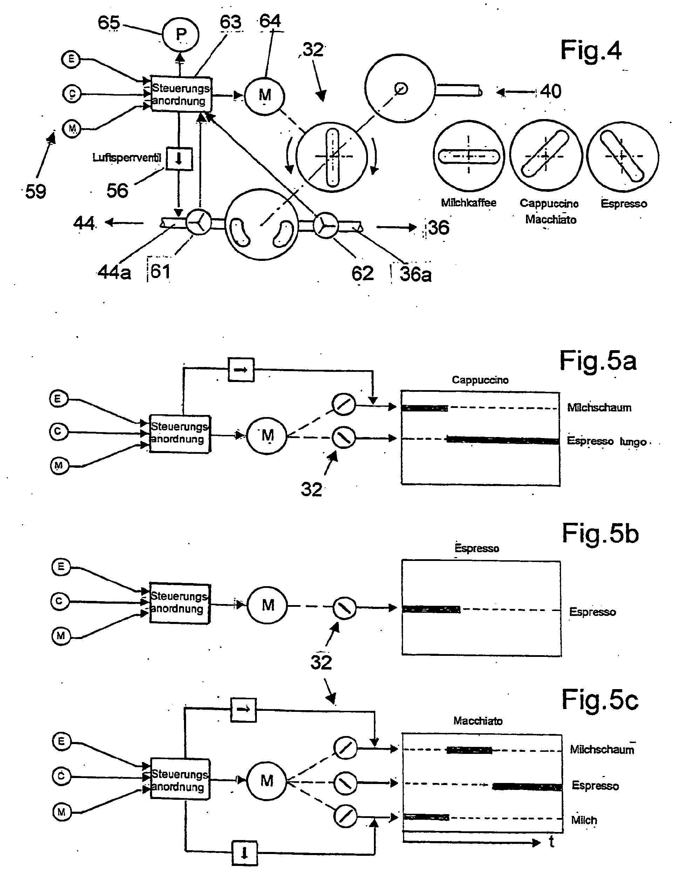

Varianten der oben beschriebenen ersten Ausführungsform - abgesehen von der zweiten Ausführungsform gemäß den Figuren 3 und 5, die zur Verwendung von Milch- oder Milchpulverportionseinheiten ohne integrierte Schäumvorrichtung vorgesehen ist - weisen folgende Merkmale auf:
Statt der Brühwasserzulaufnadel 1 6 für eine Kaffee- oder Kakaoportionseinheit 15 und statt der Heißwasserzulaufnadel 19 für eine Milch- oder Milchportionseinheit 18 können bei einer anderen Ausbildung dieser Portionseinheiten mit wasserdurchlässigen Wänden Wasserzuführungsdüsen vorgesehen sein, die auf die Portionseinheiten gepresst werden.

Statt der Magnetventile 13, 14 können andere, mechanisch oder hydraulisch gesteuerte Ventile vorgesehen sein, über welche das Brühwasser bzw. Heißwasser in die Aufnahmekammern 4, 5 zugeführt wird.

Das Getränkezubereitungsgerät umfasst eine Steuerungsanordnung 63, die mit einem Programmwahlschalter bzw., wie in den Figur 1 und Figur 3 für die erste und zweite Ausführungsform gezeigt, einer Gruppe Programmwahltasten 59 in Verbindung steht. Zum Beispiel kann mit den in Figur 1 und Figur 3 dargestellten Programmwahltasten, je nachdem welche Taste betätigt wird, mit der Taste E Espresso, mit der Taste C Cappuccino und mit der Taste M Latte Macchiato erzeugt werden. Mittels des Programmwahlschalters oder der Gruppe Programmwahltasten 59 kann je nach Geräteausstattung eine Festprogrammierung für eine bestimmte Getränkeart mit zugehöriger Reihenfolge und Mengenzuordnung der Getränkebestandteile gewählt und gestartet werden oder aber ein Programm zunächst vorprogrammiert und dann gestartet werden.

Eine sehr einfache Lösung kann statt dessen auch mit einem von Hand betätigten Wahlhebel, der mit einem mechanischen Zwei-Wege-Ventil mit Nullstellung verbunden ist oder mit Schlauchklemmventilen zur alternativen oder kumulativen Wasserzufuhr zu den Aufnahmekammern 4, 5 realisiert werden, wobei auch die Zubereitungswasser-Mengensteuerung von Hand nach subjektivem Geschmack erfolgen kann.

Zur Zubereitung eines Kaffee- oder Kakao- oder Kaffee-Milchgetränks wird zur Beladung der Brüheinheit 2 des Zubereitungsgerätes 1 das Brüheinheitoberteil 6 mit dem Schwenkhebel 8 nach oben geschwenkt, wie in Figur 2 dargestellt, wonach jeweils eine Kaffee- oder Kakaoportionseinheit 1 5 in die zugehörige Aufnahmekammer 4, die eine Brühkammer ist und/oder eine Milch oder Milchpulverportionseinheit 18 mit integrierter Schäumvorrichtung in die zugehörige Aufnahmekammer 5 auf den Portionseinheitenaufnahmeträger 3 gelegt wird. Anschließend wird die Brüheinheit 2 durch Abschwenken des Brüheinheitoberteils 6 druck- und flüssigkeitsdicht geschlossen und verriegelt, siehe Figur 1. Dabei wird mittels einer Prüfvorrichtung, die z.B. mit den Mikroschaltern 11, 12 und der Steuerungsanordnung realisiert ist, geprüft, ob sich wenigstens eine Portionseinheit in der Brüheinheit 2 befindet bzw. ob das Brüheinheitoberteil 6 bis auf diese abgesenkt ist. Während des Absenkvorgangs werden die Wasserzuführungsnadeln 16, 19 innerhalb der Brüheinheit 2 gegebenenfalls in die Portionseinheiten 15, 19 gestochen, wonach das Getränkezubereitungsgerät geschlossen ist und zur Getränkezubereitung vorbereitet ist. Nach Einschalten des Kaffeezubereitungsgeräts mit einem Netzschalter 60 und Wahl des zuzubereitenden Getränks durch Betätigung einer der Programmwahltasten der Gruppe 59 wird aus dem Wasservorratsgefäß Wasser durch den Durchlauferhitzer gepumpt und der Heißwasserzuführung 9 in der Brüheinheit 2 zugeführt. Je nach Programmierung wird das Heißwasser über das angesteuerte Magnetventil 13 bzw. 14 einer der beiden Aufnahmekammern 4, 5 oder beiden Aufnahmekammern 4, 5 zugleich zugeleitet.

Im einzelnen fließt im Fall der ausgewählten Kaffee- oder Kakaozubereitung das Brühwasser unter Pumpen- oder Boilerdruck über die in die Kaffee- oder Kakaoportionseinheit 1 5 eingestochene Brühwasserzulaufnadel 1 6 in deren Inneres. Der damit erzeugte Kaffeesud fließt aus dem Kaffeeauslauf 17 der Portionseinheit 15, der aus der Auflauföffnung 4a der Kaffee- oder Kakaoportionseinheitaufnahmekammer 4 herausragt, in das Auffanggefäß 58.

Wenn durch entsprechenden Auswahlbefehl an die Steuerungsanordnung Heißwasser der Milch- oder Milchpulverportionseinheit 18 mit integrierter Schäumvorrichtung in der Milch- oder Milchpulverportionseinheitaufnahmekammer 5 über das Magnetventil 14 und die Heißwasserzulaufnadel 19 zugeleitet wird, erhitzt sich die Milch bzw. löst sich das Milchpulver unter Erhitzung auf und bei Erreichen eines gerätesystemabhängigen Zubereitungswasserdruck durchstößt die Pyramidenplatte 20 mit den Pyramiden 21 die aufliegende Trennfolie 22, wonach die erhitzte Milch durch den an einem Außenumfang der Pyramidenplatte 20 ausgebildeten Siebkamm 23 in das auf der Unterseite der Pyramidenplatte ausgeformte Schäumlabyrinth 24 fließt. In dem Schäumlabyrinth wird die erhitzte Milch aufgeschäumt. Der entstandene Milchschaum fließt über dem Milchschaumauslauf 25 der Portionseinheit 18, der in dem Auslauf bzw. der Öffnung 5a der Milch- oder Milchpulverportionseinheitaufnahmekammer 5 sitzt, in das Auffanggefäß 58.

Nach Zubereitung des jeweiligen Getränks kann das Brüheinheitoberteil 6 aufgeklappt werden und die verbrauchten Portionseinheiten 15, 16 können durch Betätigung der Auswerfervorrichtung aus den Aufnahmekammern 4, 5 ausgeworfen werden, wonach das Getränkezubereitungsgerät zur Aufnahme frischer Portionseinheiten für die nächste Getränkezubereitung bereit ist.

Im nachfolgenden wird die zweite Ausführungsform des Getränkezubereitungsgeräts anhand der Figuren 3 - 6 erläutert, die sich von der obigen ersten Ausführungsform vor allem dadurch unterscheidet, dass sie zur Verwendung einer Milch- oder Milchpulverportionseinheit 43 ohne integrierte Schäumvorrichtung geeignet ist, da eine Schäumvorrichtung 50 integraler Bestandteil der Brüheinheit 27 ist.

Weiterhin sind in einem Brüheinheitunterteil 28 die Milch- oder Milchpulverportionsaufnahmekammer 29 und die Kaffee- oder Kakaoaufnahmekammer 33 angeordnet. Die mit dem Brüheinheitunterteil 28 und einem Brüheinheitoberteil 30 gebildete Brüheinheit 27 kann durch Hochklappen des Brüheinheitoberteils 30 oder durch Abklappen des Brüheinheitunterteils 28 geöffnet werden, wodurch die Portionseinheiten 35 und 43 freiliegen. Ein Brühkammeroberteilchassis 31 in Figur 3 trägt eine gemeinsame Aufnahmekammerdeckplatte 34, von der eine nicht bezeichnete einseitige vertikale umlaufende Wand nach unten abgesenkt ist, um die Kaffee- oder Kakaoaufnahmekammer 33 zu bilden, die unten durch eine Pyramiden 37 aufweisende Pyramidenplatte 38 auf dem Brüheinheitunterteil 28 mit Ausnahme eines Kaffeeauslaufs 41 dicht abgeschlossen werden kann. Auf den Pyramiden 37 der Pyramidenplatte 38 liegt eine Bodenfolie 39 der Kaffee- oder Kakaoportionseinheit 35 auf.

Hingegen wird eine nicht bezeichnete Umfangswand der Milch- oder Milchpulverportionsaufnahmekammer 29 durch eine Erhebung des Brüheinheitunterteils 28 gebildet, welches die Milch- oder Milchpulverportionsaufnahmekammer 29 unten mit Ausnahme einer Durchgangsöffnung 28a abschließt. Oben ist die Milch- oder Milchpulveraufnahmekammer 29 durch die gemeinsame Aufnahmekammerdeckplatte 34 abgeschlossen.

Jeweils ein Rand der Kaffee- oder Kakaoportionseinheit 35 und der Milch- oder Milchpulverportionseinheit 43 liegt an einer Auswerfervorrichtung 42 an, und zwar so, dass die verbrauchte Kaffee- oder Kakaoportionseinheit 35 und die Milch- oder Milchpulverportionseinheit 43 nach Öffnen der Brüheinheit 27 ausgeworfen werden können.

Von oben ragen durch ein Brüheinheitoberteilchassis 31 und die gemeinsame Aufnahmekammerdeckplatte 34 die Brühwasserzulaufnadel 36 in die Kaffee- oder Kakaoaufnahmekammer 33 und die Heißwasserzulaufnadel 44 in die Milch- oder Milchpulverportionsaufnahmekammer 29. Die Brühwasserzulaufnadel 36 und die Heißwasserzulaufnadel 44 stehen über ein manuell oder motorisch betätigbares Keramikventil 32 mit der Heißwasserzuführung 40 in auswählbarer fluidleitender Verbindung.

Die Kaffee- oder Kakaoaufnahmekammer 33 mündet in einen Kaffeeauslauf 41, der unten aus dem Brüheinheitunterteil herausragt.

Hingegen befindet sich in dem Brüheinheitunterteil 28 für die Milch- oder Milchpulverportionsaufnahmekammer 29 die erwähnte Durchgangsöffnung 28a, an die sich eine externe Schäumvorrichtung 50 nach unten anschließt.

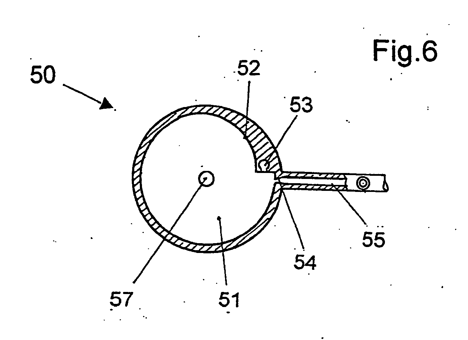

In Verlängerung der Durchgangsöffnung 28a weist die externe Schäumvorrichtung 50, d.h. eine Milchschäumvorrichtung, mit einem inneren Schäumzylinder 51 in einem verdickten Abschnitt einer spiralförmig geformten Schäumzylinderwand 52 eine Milcheintrittsdüse 53 mit einem horizontalen Düsenausgang und einer vertikalen Bohrung auf, die mit dem Milchauslauf 49 der Milch- und Milchpulverportionseinheit 43 in Verbindung steht. Der Düsenausgang der Milcheintrittsdüse 53 ist in axialer Verlängerung einer Luftdüse 54 angeordnet, wie aus Figur 6 im einzelnen ersichtlich, in der die Schäumvorrichtung 50 in Höhe des Düsenausgangs der Milcheintrittsdüse und einer Luftdüse 54 geschnitten dargestellt ist. Die Luftdüse 54 wird über eine Luftleitung 55, die mit einem Sperrventil 56 absperrbar ist, mit atmosphärischer Luft versorgt. Der in dem Schäumzylinder 51 gebildete Milchschaum kann durch eine Bodenöffnung 57 des Schäumzylinders, der somit einen Milchschaumauslauf bildet, in das Auffanggefäß 58 entlassen werden.

In Figur 4 ist das Zwei-Wege-Keramikventil 32, welches an die Heißwasserzuführung 40 angeschlossen ist, mit drei auseinandergenommenen dargestellten Keramikscheiben gezeigt. Von den drei Scheiben weist eine äußere Scheibe einen Ausgang 36a auf, an denen die Brühwasserzulaufnadel 36 an der Kaffee- oder Kakaoaufnahmekammer 33 angeschlossen ist, und einen weiteren Ausgang 44a, der mit der Heißwasserzulaufnadel 44 an der Milch- oder Milchpulverportionsaufnahmekammer 29 verbunden ist. Je nach der Stellung der mittleren Scheibe des Keramikventils 32 kann der Ausgang 36a oder der Ausgang 44a zur Zubereitung von Kaffee oder Milchschaum beaufschlagt werden.

In der in dem linken Teil der Figur 4 dargestellten Position der mittleren Scheibe des Keramikventils befindet sich diese in ihrer Nullstellung. Zur Zubereitung eines Getränks kann je nach gewünschter Getränkeart die Scheibe entweder von Hand oder programmgesteuert mittels eines Motors 64 nacheinander in die Position "Espresso" oder "Milch/Milchschaum"/"Latte Macchiato" oder "Milchkaffee" gedreht werden. Diese möglichen Drehstellungen sind für die freigestellte mittlere Scheibe in dem rechten Teil der Figur 4 angezeigt. Nach einem Zubereitungszyklus wird die mittlere Scheibe entweder automatisch oder von Hand oder zweckmäßigerweise mit dem Öffnungsvorgang der Brühkammer gekoppelt, wieder in ihre Nullstellung gedreht. Dabei werden die Zubereitungswasser-Mengen mittels in den Versorgungsleitungen liegenden Durchflussmessern (flow meter) 61; 62 und der Steuerungsanordnung 63 dem jeweils ausgewählten Programm entsprechend bemessen.

Im einzelnen erfolgen bei Einsatz einer Milch- oder Milchpulverportionseinheit 43 ohne integrierte Schäumvorrichtung in der Brüheinheit 27 in Figur 3 der Aufstechvorgang, die Heißwasserzuführung und das Auflösen des Milchpulvers in der Milch- oder Milchpulverportionseinheit 43 wie bei der Milch- oder Milchpulverportionseinheit 19 mit integrierter Schäumvorrichtung in der ersten Ausführungsform des Getränkezubereitungsgeräts 1 mit der Brüheinheit 2, wobei das Heißwasser aus der Heißwasserzuführung 40 über das Keramikventil 32 statt Magnetventilen der in die Milch- oder Milchpulverportionseinheit 44 eingestochenen Wasserzuleitungsnadel 44 zugeführt wird. Das in der Milch- oder Milchpulverportionseinheit 44 aufgelöste Milchpulver oder Milchkonzentrat vermischt sich in dieser mit dem Heißwasser und das Gemisch fließt, nachdem die Pyramiden 46 der Pyramidenplatte 45 bei einem von dem Gerätesystem vorgegebenen Wasserdruck die zwischen der Milch und der Pyramidenplatte 45 angeordnete Trennfolie 48 durchstochen hat, durch den am Umfang der Pyramidenplatte ausgeformten Siebkamm 47 und anschließend aus dem Milchauslauf 49 der Milch- oder Milchpulverportionseinheit 43 und die Durchgangsöffnung 28a des Brüheinheitunterteils 28 in die unter dieser angeordnete Schäumvorrichtung 50.

In der Schäumvorrichtung 50 wird die Strömung der noch unter dem Vorderdruck des Heißwassers stehenden Milch durch die Milcheintrittsdüse 53 tangential in den Schäumzylinder 51 gefördert, wobei durch die im wesentlichen spiralförmige Konfiguration der Zylinderwand 52 und durch die Positionierung der Milcheintrittsdüse 53 an einem durch die Zylinderwand 52 gebildeten Vorsprung ein Wirbel und in der Zone des Milcheintritts ein Unterdruck entstehen. Durch diesen Unterdruck wird auch aus der versetzt neben der Milcheintrittsdüse 53 in den Schäumzylinder mündenden Luftdüse 54 Luft aus der Luftleitung 55 angesaugt, die zu der Atmosphäre offen ist. Durch diese Vorgänge entsteht in dem Schäumzylinder 51 Milchschaum der gewünschten Konsistenz, der durch die Bodenöffnung 57 des Schäumzylinders austritt, die den Milchschaumauslauf darstellt.

Bei der Milchschaumerzeugung ist das in der Luftleitung 55 angeordnete Sperrventil 56 geöffnet. Wird das Sperrventil 56 hingegen geschlossen, was manuell oder programmgesteuert selbsttätig erfolgen kann und die Luftzufuhr zu dem Schäumzylinder 51 demgemäß gesperrt, so wird in diesem eine Schaumbildung weitgehend verhindert und es tritt aus der Bodenöffnung 57 des Schäumzylinders erhitzte Milch aus. Programmgesteuert kann damit in einer Ablauffolge Milch-Milchschaum-Espresso zur Herstellung von Latte Macchiato erzeugt werden.

Nach erfolgter Zubereitung des Getränks kann die Brüheinheit 27 durch Aufoder Abklappen des Brüheinheitober- oder -unterteils 28 bzw. 30 geöffnet werden, wonach selbsttätig die verbrauchten Portionseinheiten mittels der Auswerfervorrichtung 42 in ein nicht dargestelltes Abfallgefäß entsorgt werden können, welches zu diesem Zweck in dem Getränkezubereitungsgerät angeordnet ist.

### Bezugszahlenliste

| | | | |
|---|---|---|---|
| 1 | Getränkezubereitungsgerät | 19 | Heißwasserzulaufnadel für |
| 1a | Aufnahmesockel | | Milch- oder Milchpulverportionseinheit |
| 2 | Brüheinheit | | |
| 3 | Portionseinheitenaufnahmeträger | 20 | Pyramidenplatte für Milch- oder Milchpulverportionseinheit |
| 4 | Kaffee- oder Kakaoportionseinheitaufnahmekammer | 21 | Pyramiden |
| | (erste Aufnahmekammer) | 22 | Trennfolie |
| 4a | Auslauf (Öffnung der Aufnahmekammer 4) | 23 | Siebkamm |
| | | 24 | Schäumlabyrinth |
| 5 | Milch- oder Milchpulverportionseinheitaufnahmekammer | 25 | Milchschaumauslauf der Portionseinheit 18 |
| | | 26 | Getränkezubereitungsgerät |
| | (zweite Aufnahmekammer) | 27 | Brüheinheit |
| 5a | Auslauf (Öffnung der Aufnahmekammer 5) | 28 | Brüheinheitunterteil |
| | | 28a | Durchgangsöffnung |
| 6 | Brüheinheitoberteil | 29 | Milch- oder Milchpulverportionsaufnahmekammer |
| 6a | Achse | | |
| 7 | Brüheinheitoberteilchassis | | (zweite Aufnahmekammer) |
| 8 | Schwenkhebel | 30 | Brüheinheitoberteil |
| 9 | Heißwasserzulauf | 31 | Brüheinheitoberteilchassis |
| 10 | Auswerfervorrichtung | 32 | Keramikventil |
| 11 | Mikroschalter | 33 | Kaffee- oder Kakaoaufnahmekammer |
| 11a | Betätigungselement | | |
| 12 | Mikroschalter | | (erste Aufnahmekammer) |
| 12a | Betätigungselement | 34 | gemeinsame Aufnahmekammerdeckplatte |
| 13 | Magnetventil | | |
| 14 | Magnetventil | 35 | Kaffee- oder Kakaoportionseinheit |
| 15 | Kaffee- oder Kakaoportionseinheit | 36 | Brühwasserzulaufnadel für |
| 16 | Brühwasserzulaufnadel für Kaffee- oder Kakaoportionseinheit | 36a | Kaffee- oder Kakaoportionseinheit Ausgang |
| 17 | Kaffeeauslauf der Portionseinheit 15 | 37 | Pyramiden der Kaffee- oder Kakaoaufnahmekammer 33 |
| 18 | Milch- oder Milchpulverportionseinheit mit integrierter Schäumvorrichtung | 38 | Pyramidenplatte der Kaffee- oder Kakao aufnahmekammer 33 |
| 18a | Abdeckfolie | | |
| 39 | Bodenfolie der Kaffee- oder Kakaoportionseinheit 35 | | |
| 40 | Heißwasserzuführung | | |
| 41 | Kaffeeauslauf | | |
| 42 | Auswerfervorrichtung | | |
| 43 | Milch- oder Milchpulverportionseinheit ohne integrierte Schäumvorrichtung | | |
| 44 | Heißwasserzulaufnadel für Milch- oder Milchpulverportionseinheit 43 | | |
| 44a | Ausgang | | |
| 45 | Pyramidenplatte | | |
| 46 | Pyramiden | | |
| 47 | Siebkamm | | |
| 48 | Trennfolie | | |
| 49 | Milchauslauf der Milch- oder Milchpulverportionseinheit 43 | | |
| 50 | Schäumvorrichtung (extern) | | |
| 51 | Schäumzylinder | | |
| 52 | Schäumzylinderwand | | |
| 53 | Milcheintrittsdüse | | |
| 54 | Luftdüse | | |
| 55 | Luftleitung | | |
| 56 | Sperrventil | | |
| 57 | Bodenöffnung des Schäumzylinders (Milchschaumauslauf) | | |
| 58 | Auffanggefäß | | |
| 59 | Programmwahlschalter oder -tasten (Gruppe) | | |
| 60 | Netzschalter | | |
| 61 | Durchflussmesser (flow meter) | | |
| 62 | Durchflussmesser (flow meter) | | |
| 63 | Steuerungsanordnung | | |
| 64 | Keramikventilmotor | | |
| 65 | Wasserpumpe | | |

## Patentansprüche

1. Brüheinheit eines Getränkezubereitungsgeräts (1, 26) mit wenigstens einer ersten Aufnahmekammer (4, 33) mit einem Auslauf (4a, 41), die zumindest zur Aufnahme einer Kaffee- oder Kakaoportionseinheit (15, 35) und Zubereitung eines Getränks durch deren Gebrauch geeignet ist,
wobei eine zweite Aufnahmekammer (5, 29) mit einem Auslauf (5a, 28a) zur Aufnahme einer Milch- oder Milchpulverportionseinheit und Zubereitung eines Milchprodukts in gleicher Höhe neben der ersten Aufnahmekammer (4, 33) angeordnet ist,
wobei die Innenform der ersten Aufnahmekammer (4) und der zweiten Aufnahmekammer (5) jeweils an die Außenform der aufzunehmenden Portionseinheit (15, 18) angepasst ist und
wobei eine Wasserzufuhrvorrichtung (9, 16, 19; 40 36, 44) oben in die erste Aufnahmekammer (4, 33) und in die zweite Aufnahmekammer (5, 29) mündet,
**dadurch gekennzeichnet,**
**dass** der ersten Aufnahmekammer (4, 33) und der zweiten Aufnahmekammer (5, 29) eine gemeinsame selbsttätige Auswerfervorrichtung (10, 42) zugeordnet ist.

2. Brüheinheit nach Anspruch 1,
**dadurch gekennzeichnet,**
**dass** die zweite Aufnahmekammer (5) zur Aufnahme einer Milchoder Milchpulverportionseinheit (18) mit integrierter Schäumvorrichtung geeignet ist oder
**dass** der zweiten Aufnahmekammer (29) eine Schäumvorrichtung (50) zugeordnet ist, die mit dem Auslauf (28a) der zweiten Aufnahmekammer (29) in fluidleitender Verbindung steht,
**dass** in Verlängerung des als Durchgangsöffnung ausgebildeten Auslaufs (28a) die Schäumvorrichtung (50) mit einem inneren Schäumzylinder (51) in einem verdickten Abschnitt einer spiralförmig geformten Schäumzylinderwand (52) eine Mitcheintrittsdüse (53) mit einem horizontalen Düsenausgang und einer vertikalen Bohrung aufweist, die mit einem Milchauslauf (49) der Milch- und Milchpulverportionseinheit (43) in Verbindung steht, und dass ein Düsenausgang der Milcheintrittsdüse (53) in axialer Verlängerung einer Luftdüse (54) angeordnet ist.

3. Brüheinheit nach Anspruch 2,
**dadurch gekennzeichnet,**
**dass** die Schäumvorrichtung als Wegwerfteil ausgeführt ist.

4. Brüheinheit nach einem der Ansprüche 1 bis 3,
**dadurch gekennzeichnet,**
**dass** die Portionseinheiten (15, 18, 35, 43) mit einer optischen Kennung ausgestattet sind, die mit einer optischen Kennung an der ersten Aufnahmekammer (4, 33) und/oder zweiten Aufnahmekammer (5, 29) korrespondiert.

5. Brüheinheit nach einem der Ansprüche 1 bis 4,
**dadurch gekennzeichnet,**
**dass** die erste Aufnahmekammer (4, 33) eine Brühkammer ist.

6. Brüheinheit nach einem der vorangehenden Ansprüche,
**dadurch gekennzeichnet,**
**dass** die erste Aufnahmekammer (4, 33) und die zweite Aufnahmekammer (5, 29) als eine gemeinsame Baueinheit ausgebildet sind.

7. Brüheinheit nach einem der vorangehenden Ansprüche,
**dadurch gekennzeichnet,**
**dass** der Auslauf der ersten Aufnahmekammer und der Auslauf der zweiten Aufnahmekammer zu einem gemeinsamen Auslaufkanal zusammengeführt sind.

8. Brüheinheit nach einem der vorangehenden Ansprüche,
**dadurch gekennzeichnet,**
**dass** die Brüheinheit (2) ein um eine im wesentlichen waagerechte Achse (6a) aufklappbares Brüheinheitoberteil (30) aufweist.

9. Brüheinheit nach einem der Ansprüche 1 bis 7,
**dadurch gekennzeichnet,**
**dass** die Brüheinheit (27) ein um eine im wesentlichen waagerechte Achse abklappbares Brüheinheitunterteil (28) umfasst.

10. Brüheinheit nach einem der Ansprüche 1 bis 7,
**dadurch gekennzeichnet,**
**dass** die Brüheinheit ein um eine im wesentlichen vertikale Achse schwenkbares Oberteil besitzt.

11. Brüheinheit nach einem der Ansprüche 1 bis 7,
**gekennzeichnet durch**
ein um eine im wesentlichen vertikale Achse schwenkbares Unterteil der Brüheinheit.

12. Brüheinheit nach einem der vorangehenden Ansprüche,
**dadurch gekennzeichnet,**
**dass** an der ersten Aufnahmekammer (4, 33) und an der zweiten Aufnahmekammer (4a, 41) eine für beide Aufnahmekammern (4, 33; 4a, 41) gleichzeitig aktivierbare Spülvorrichtung vorgesehen ist.

13. Brüheinheit nach einem der vorangehenden Ansprüche,
**dadurch gekennzeichnet,**
**dass** die Wasserzufuhrvorrichtung (9, 16, 19; 40, 36, 44) mit einer Steuerungsanordnung aktivierbar ist, die so ausgebildet ist, dass Wasser zu der ersten Aufnahmekammer (4, 33) und der zweiten Aufnahmekammer (5, 29) im wesentlichen gleichzeitig oder zeitlich gestaffelt zuführbar ist oder aber nur der ersten Aufnahmekammer (4, 33) oder nur der zweiten Aufnahmekammer (5, 29) in einem Getränkezubereitungszyklus zuführbar ist.

14. Brüheinheit nach Anspruch 13,
**dadurch gekennzeichnet,**
**dass** mit Ausgängen der Steuerungsanordnung gesteuerte Ventile (13, 14, 50) in Verbindung stehen, über welche die Wasserzufuhr zu der ersten Aufnahmekammer (4, 33) und zu der zweiten Aufnahmekammer (5, 29) erfolgt.

15. Brüheinheit nach Anspruch 14,
**gekennzeichnet durch**
ein Keramikscheibenventil (50) als gesteuerte Ventilanordnung.

16. Brüheinheit nach einem Anspruch 14,
**gekennzeichnet durch**
Magnetventile (13, 14) als gesteuerte Ventile.

17. Brüheinheit nach Anspruch 14,
**gekennzeichnet durch**
Schlauchklemmventile als gesteuerte Ventile.

18. Brüheinheit nach einem der Ansprüche 13 bis 17,
**dadurch gekennzeichnet,**
**dass** an der ersten Aufnahmekammer (4) und an der zweiten Aufnahmekammer (5) jeweils eine Prüfeinheit (11, 12) angeordnet ist, die mit Eingängen der Steuerungsanordnung (63) in Verbindung steht, und
**dass** die Prüfeinheiten (11, 12) und die Steuerungsanordnung so ausgebildet sind, dass eine Wasserzufuhr zu einer der Aufnahmekammern (4, 5) bzw. zu beiden Aufnahmekammern (4, 5) nur dann freigeschaltet ist, wenn in die Aufnahmekammern (4, 5) jeweils eine Portionseinheit (15, 18) eingesetzt ist.

19. Brüheinheit nach einem der Ansprüche 8 bis 18,
**gekennzeichnet durch**
Mittel zum Wasserzufuhrstop bei geöffneter Brüheinheit oder gezogenem Schubladenträger.

20. Brüheinheit nach einem der Ansprüche 13 bis 19,
**dadurch gekennzeichnet,**
**dass** die Steuerungsanordnung (63) geeignet ist, eine fest programmierte Reihenfolge und Menge des in die beiden Aufnahmekammern (4, 33 bzw. 5, 29) zugeführten Heißwassers zu steuern.

21. Brüheinheit nach einem der Ansprüche 13 bis 1 9,
**dadurch gekennzeichnet,**
**dass** in der Steuerungsanordnung (63) mehrere Programme für Reihenfolge und Menge der Wasserzufuhr in die beiden Aufnahmekammern gespeichert sind und
**dass** in der Steuerungsanordnung (63) eine Auswahlvorrichtung vorgesehen ist, mit der eines der gespeicherten Programme auswählbar ist.

22. Brüheinheit nach einem der vorangehenden Ansprüche,
**dadurch gekennzeichnet,**
**dass** an den Aufnahmekammern jeweils eine Leseeinrichtung angeordnet ist, die geeignet ist, eine Kennung an einer in die Aufnahmekammer eingesetzten Portionseinheit zu lesen, und dass ein Ausgang jeder der Leseeinrichtungen mit der Steuerungsanordnung in signal-/datenübertragender Verbindung steht.

23. Brüheinheit nach Anspruch 22,
**dadurch gekennzeichnet,**
**dass** die Auswahleinrichtung mit den Leseeinrichtungen an den Aufnahmekammern in signal-/datenübertragender Verbindung steht und geeignet ist, die Auswahl eines festen Programms für Zubereitungsreihenfolge und -menge in der Steuerungsanordnung (63) abhängig von den mit den Leseeinrichtungen erkannten Portionseinheiten in den Aufnahmekammern zu steuern.

## Claims

1. Heating element of a drink preparation device (1, 26) comprising at least one first take-up chamber (4, 3) including an outlet (4a, 41) said chamber being suited to take up at least one coffee or cocoa portion unit (15, 35) and to prepare a drink by making use of it,
wherein a second take-up chamber (5, 29) including an outlet (5a, 28a) suited to take up one milk or milk powder portion unit and to prepare a milk produce is disposed at the same level aside of the first take-up chamber (4, 33),
wherein the inner shapes of the first take-up chamber (4) and the second take-up chamber (5) each are adapted to the outer shape of the portion unit (15, 18) to be taken up, and
wherein a water supply device (9, 16, 19; 40, 36, 44) opens above into the first take-up chamber (4, 33) and into the second take-up chamber (5,29)
**characterized in**
**that** the first take-up chamber (4, 33) and the second take-up chamber (5, 29) include a common automatic ejector device (10, 42).

2. Heating element according to claim 1,
**characterized in**
**that** the second take-up chamber (5) is suited to take up a milk or milk powder portion unit (18) including an integrated frothing device or
**that** to the second take-up chamber (29) a frothing device (50) is associated which is fluid-conductively connected with the outlet (28a) of the second take-up chamber (29),
**that** as an elongation of the outlet (28a) shaped as a passage opening, the frothing device (50) including an internal frothing cylinder (51) has, in a thickened section of a helically-shaped frothing cylinder wall (52), a milk entry nozzle (53) including a horizontal nozzle outlet and a vertical bore which is connected with a milk outlet (49) of the milk and milk powder portion unit (43), and
**that** a nozzle outlet of the milk entry nozzle (53) is disposed in the axial elongation of an air nozzle (54).

3. Heating element according to claim 2,
**characterized in**
**that** the frothing device is provided as a throw-away part.

4. Heating element according to one of claims 1 to 3,
**characterized in**
**that** the portion units (15, 18, 35, 43) are provided with an optical identifier which corresponds with an optical identifier on the first take-up chamber (4, 33) and/or the second take-up chamber (5, 29).

5. Heating element according to one of claims 1 to 4,
**characterized in**
**that** the first take-up chamber (4, 33) is a brewing chamber.

6. Heating element according to one of the foregoing claims,
**characterized in**
**that** the first take-up chamber (4, 33) and the second take-up chamber (5, 29) are formed as one common structural unit.

7. Heating element according to one of the foregoing claims,
**characterized in**
**that** the outlet of the first take-up chamber and the outlet of the second take-up chamber are joined together to constitute one common outlet channel.

8. Heating element according to one of the foregoing claims,
**characterized in**
**that** the heating element (2) comprises a heating element upper part (30) that can be hinged up about a substantially horizontal axle (6a).

9. Heating element according to one of claims 1 to 7,
**characterized in**
**that** the heating element (27) comprises a heating element bottom portion (28) that can be hinged down about a substantially horizontal axle.

10. Heating element according to one of claims 1 to 7,
**characterized in**
**that** the heating element includes an upper portion that can be hinged about a substantially vertical axle.

11. Heating element according to one of claims 1 to 7,
**characterized by**
a base portion of the heating element that can be hinged about a substantially vertical axle.

12. Heating element according to one of the foregoing claims,
**characterized in**
**that** on the first take-up chamber (4, 33) and on the second take-up chamber (4a, 41) a rinsing device is provided which can simultaneously be activated for both take-up chambers (4, 33, 4a, 41).

13. Heating element according to one of the foregoing claims,
**characterized in**
**that** the water supply device (9, 16, 19, 40, 36, 44) can be activated by means of a control arrangement which is so designed that the water can be fed to the first take-up chamber (4, 33) and the second take-up chamber (5, 29) substantially simultaneously or timely graded, or can be fed only to the first take-up chamber (4, 33) or only to the second take-up chamber (5, 29) in one drink preparation cycle.

14. Heating element according to claim 13,
**characterized in**
**that** to the outflows of the control arrangement, controlled valves (13, 14, 40) are connected via which the water supply to the first take-up chamber (4, 33) and to the second take-up chamber (5, 29) is effected.

15. Heating element according to claim 14,
**characterized by**
a ceramics disc valve (50) as controlled valve arrangement.

16. Heating element according to claim 14,
**characterized by**
magnetic valves (13, 14) as controlled valves.

17. Heating element according to claim 14,
**characterized by**
hose clip valves as controlled valves

18. Heating element according to one of claims 13 to 17,
**characterized in**
**that** on the first take-up chamber (4) and on the second take-up chamber (5), one checking unit each (1, 12) is arranged connected with inputs of the control arrangement (63), and
**that** the checking units (11, 12) and the control arrangement are so designed that a water supply to one of the take-up chambers (4, 5), or to both of the take-up chambers is switched clear only if one portion unit (15, 18) each is inserted in the take-up chambers (4, 5).

19. Heating element according to one of claims 8 to 18,
**characterized by**
means for a water supply stop if the element is open or the drawer carrier is drawn out.

20. Heating element according to one of claims 13 to 19,
**characterized in**
**that** the control arrangement (63) is suited to control a fixed-programmed sequence and amount of the hot water supplied to the two take-up chambers (4, 33 or 5, 29).

21. Heating unit according to one of claims 13 to 19,
**characterized in**
**that** in the control arrangement (63) a plurality of programs for the sequence and the amount of the water supply to the two take-up chambers are stored,
and **that** in the control arrangement (63) a selection means is provided by which one of the stored programs may be selected.

22. Heating unit according to one of the foregoing claims,
**characterized in**
**that** on the take-up chambers one reading means each is disposed which is suited to read an identifier on a portion unit inserted into the take-up chamber, and that one output of each of the reading means is connected with the control arrangement for signal and data transmission.

23. Heating unit according to claim 22,
**characterized in**
**that** the selection means is connected with the reading means on the take-up chambers signal and data transmission and is suited to control the selection of a fixed program of the preparation sequence and amount in the control arrangement (63) depending on the portion unit in the take-up chambers detected by the reading means.

## Revendications

1. Unité d'échaudage d'un appareil de préparation de boissons (1, 26), comprenant au moins une première chambre de réception (4, 33) dotée d'une sortie (4a, 41), qui convient au moins à la réception d'une dose unitaire de café ou de cacao (15, 35) et à la préparation d'une boisson par l'utilisation de celle-ci,
une deuxième chambre de réception (5, 29) dotée d'une sortie (5a, 28a) étant disposée au même niveau à côté de la première chambre de réception (4, 33) pour recevoir une dose unitaire de lait ou de poudre de lait et pour la préparation d'un produit lacté,
la forme intérieure de la première chambre de réception (4) et de la deuxième chambre de réception (5) étant respectivement adaptée à la forme extérieure de la dose unitaire (15, 18) à recevoir, et
un dispositif d'alimentation en eau (9, 16, 19 ; 40, 36, 44) débouchant, en partie supérieure, dans la première chambre de réception (4, 33) et dans la deuxième chambre de réception (5, 29),
**caractérisée en ce**
**qu'**est associé à la première chambre de réception (4, 33) et à la deuxième chambre de réception (5, 29) un dispositif éjecteur automatique commun (10, 42).

2. Unité d'échaudage selon la revendication 1,
**caractérisée en ce que**
la deuxième chambre de réception (5) est apte à recevoir une dose unitaire de lait ou de poudre de lait (18) avec dispositif de moussage intégré, ou
**en ce qu'**est associé à la deuxième chambre de réception (29) un dispositif de moussage (50) qui est en communication fluidique avec la sortie (28a) de la deuxième chambre de réception (29),
**en ce que**, dans le prolongement de la sortie (28a) réalisée sous forme d'orifice de passage, le dispositif de moussage (50) pourvu d'un cylindre de moussage (51) intérieur, présente, dans une partie épaissie d'une paroi (52) du cylindre de moussage réalisée en spirale, une buse d'entrée de lait (53) pourvue d'une sortie de buse horizontale et d'un alésage vertical qui est en communication avec une sortie de lait (49) de la dose unitaire de lait et de poudre de lait (43), et
**en ce qu'**une sortie de la buse d'entrée de lait (53) est disposée dans le prolongement axial d'une buse d'air (54).

3. Unité d'échaudage selon la revendication 2,
**caractérisée en ce que**
le dispositif de moussage est réalisé en tant qu'élément jetable.

4. Unité d'échaudage selon l'une des revendications 1 à 3,
**caractérisée en ce que**
les doses unitaires (15, 18, 35, 43) sont pourvues d'un élément d'identification optique qui correspond à un élément d'identification optique sur la première chambre de réception (4, 33) et/ou sur la deuxième chambre de réception (5, 29).

5. Unité d'échaudage selon l'une des revendications 1 à 4,
**caractérisée en ce que**
la première chambre de réception (4, 33) est une chambre d'échaudage.

6. Unité d'échaudage selon l'une des revendications précédentes,
**caractérisée en ce que**
la première chambre de réception (4, 33) et la deuxième chambre de réception (5, 29) forment un ensemble commun.

7. Unité d'échaudage selon l'une des revendications précédentes,
**caractérisée en ce que**
la sortie de la première chambre de réception et la sortie de la deuxième chambre de réception se rejoignent pour former un canal de sortie commun.

8. Unité d'échaudage selon l'une des revendications précédentes,
**caractérisée en ce que**
l'unité d'échaudage (2) présente une partie supérieure (30) relevable autour d'un axe (6a) sensiblement horizontal.

9. Unité d'échaudage selon l'une des revendications 1 à 7,
**caractérisée en ce que**
l'unité d'échaudage (27) présente une partie inférieure (28) rabattable autour d'un axe sensiblement horizontal.

10. Unité d'échaudage selon l'une des revendications 1 à 7,
**caractérisée en ce que**
l'unité d'échaudage présente une partie supérieure pouvant pivoter autour d'un axe sensiblement vertical.

11. Unité d'échaudage selon l'une des revendications 1 à 7,
**caractérisée par**
une partie inférieure de l'unité d'échaudage pouvant pivoter autour d'un axe sensiblement vertical.

12. Unité d'échaudage selon l'une des revendications précédentes,
**caractérisée en ce**
**qu'**est prévu, sur la première chambre de réception (4, 33) et sur la deuxième chambre de réception (4a, 41), un dispositif de rinçage pouvant être activé simultanément pour les deux chambres de réception (4, 33 ; 4a, 41).

13. Unité d'échaudage selon l'une des revendications précédentes,
**caractérisée en ce que**
le dispositif d'alimentation en eau (9, 16, 19 ; 40, 36, 44) peut être activé au moyen d'un dispositif de commande conçu de façon que l'eau puisse être amenée à la première chambre de réception (4, 33) et à la deuxième chambre de réception (5, 29) de manière sensiblement simultanée ou étalée dans le temps, ou bien puisse être alimentée uniquement à la première chambre de réception (4, 33) ou uniquement à la seconde chambre de réception (5, 29) lors d'un cycle de préparation d'une boisson.

14. Unité d'échaudage selon la revendication 13,
**caractérisée en ce que**
sont en communication avec des sorties du dispositif de commande des soupapes pilotées (13, 14, 50), par l'intermédiaire desquelles s'opère l'amenée d'eau à la première chambre de réception (4, 33) et à la deuxième chambre de réception (5, 29).

15. Unité d'échaudage selon la revendication 14,
**caractérisée par**
une soupape à disque en céramique (50) comme système de soupape piloté.

16. Unité d'échaudage selon la revendication 14,
**caractérisée par**
des électrovannes (13, 14) en tant que soupapes pilotées.

17. Unité d'échaudage selon la revendication 14,
**caractérisée par** des vannes à pincement de tuyaux en tant que soupapes pilotées.

18. Unité d'échaudage selon l'une des revendications 13 à 17,
**caractérisée en ce**
**qu'**est disposée sur la première chambre de réception (4) et sur la deuxième chambre de réception (5) respectivement une unité de contrôle (11, 12) qui communique avec des entrées du dispositif de commande (63), et
en ce que les unités de contrôle (11, 12) et le dispositif de commande sont conçus de façon qu'une amenée d'eau à l'une des chambres de réception (4, 5) ou aux deux chambres de réception (4, 5) ne soit déclenchée que lorsqu'une dose unitaire (15, 18) est respectivement insérée dans les chambres de réception (4, 5).

19. Unité d'échaudage selon l'une des revendications 8 à 18,
**caractérisée par**
des moyens d'arrêt de l'alimentation en eau lorsque l'unité d'échaudage est ouverte ou que le support tiroir est tiré.

20. Unité d'échaudage selon l'une des revendications 13 à 19,
**caractérisée en ce que**
le dispositif de commande (63) est apte à commander une séquence et une quantité préprogrammées de l'eau chaude amenée aux deux chambres de réception (4, 33 ou 5, 29).

21. Unité d'échaudage selon l'une des revendications 13 à 19,
**caractérisée en ce que**
sont mémorisés dans le dispositif de commande (63) plusieurs programmes pour la séquence et la quantité d'eau amenée aux deux chambres de réception, et
**en ce qu'**est prévu dans le dispositif de commande (63) un dispositif de sélection permettant de sélectionner l'un des programmes mémorisés.

22. Unité d'échaudage selon l'une des revendications précédentes,
**caractérisée en ce**
**qu'**est disposé au niveau de chacune des chambres de réception un dispositif de lecture qui est apte à lire un élément d'identification sur une dose unitaire insérée dans la chambre de réception, et en ce qu'une sortie de chacun des dispositifs de lecture est en liaison de transmission de signaux/données avec le dispositif de commande.

23. Unité d'échaudage selon la revendication 22,
**caractérisée en ce que**
le dispositif de sélection est en liaison de transmission de signaux/données avec les dispositifs de lecture présents au niveau des chambres de réception et est apte à commander la sélection d'un programme fixe pour la séquence et la quantité de préparation dans le dispositif de commande (63) en fonction des doses unitaires identifiées au moyen des dispositifs de lecture dans les chambres de réception.
